# EUROPEAN PATENT SPECIFICATION

(11) **EP 3 509 434 B1**
(45) Date of publication and mention of the grant of the patent: **10.06.2026**
(21) Application number: 17783448.8
(22) Date of filing: 06.10.2017
(51) Int. Cl.: A23L 5/10, A23L 7/13, A23L 29/10, A23L 29/212, A23P 30/10

(54) **METHOD FOR PRODUCING SNACK FOOD CHIPS**
VERFAHREN ZUR HERSTELLUNG VON SNACK-CHIPS
PROCÉDÉ DE FABRICATION DE CHIPS POUR ENCAS

(30) Priority: 06.10.2016 US 201662405050 P; 31.01.2017 GB 201701528
(43) Date of publication of application: 17.07.2019
(60) Divisional application: 26173313.3
(73) Proprietor: Frito-Lay Trading Company GmbH, 3011 Bern (CH)
(72) Inventor: BHASKAR, Ajay Rajeshwar, Allen Texas 75013 (US); BOODEN, Helen Charlotte, Cotgrave Nottinghamshire NG12 3TP (GB); SMITH, Katherine Margaret, Loughborough Leicestershire LE12 1ET (GB); VERA NUNEZ, Daniel, Leicester LE1 1TH (GB)
(74) Representative: Harris, Oliver John Richard
(86) International application number: PCT/EP2017/075478
(87) International publication number: WO 2018/065575

(56) References cited:
- EP-A2- 0 324 460
- US-A- 4 770 891
- US-A1- 2002 018 837

## Description

### Background to the Invention

The present invention relates to a method of manufacturing snack food chips, in particular tortilla chips.

### Description of the Prior Art

The manufacture of snack food chips well known. A variety of different snack food chips is known having various shapes and configurations, and compositions.

It is known to provide tortilla chips, which are composed of a maize-based composition (maize hereinafter being called "corn" in accordance with the terminology used in the United States) which has been formed as a corn masa dough, which is sheeted, cut into individual dough pieces, which are typically triangular in plan (although other shapes are widely known), toasted in an oven and then fried. The fried chips are then seasoned. The masa dough uses fresh corn which has been subject to a nixtamalization process, in which the corn is boiled in an aqueous solution comprising lime, then allowed to soak in the solution and then the corn is washed and ground to produce corn masa.

US Patent Application Publication Nos. US 2005/0260314 A1 and US 2008/0044534 A1, both in the name of Baker et al., disclose a method of making a masa-based dough to produce a fried tortilla chip-like product, in which starch is added to corn masa dough to help control moisture release during frying. The dough ingredients include dry corn masa which is combined with pre-hydration water and mixed to make a pre-hydrated masa, then starches and minor ingredients are mixed with the pre-hydrated masa to form a flour, and then water is added to the flour to make an aerated buoyant masa dough. In an example the added starches are potato starch (pre-gelatinized) and modified starch.

Consumers generally desire tortilla chips which have particular visual characteristics, in particular a chip without any holes extending through the thickness of the chip and a blistered surface which comprises a distribution of small blisters on the surfaces of the chip. The blisters give the tortilla chip a more natural hand-fried appearance as compared to a uniformly flat surface. However, the blisters should be uniformly distributed over the chip surface, have a regular size distribution and should not be excessively punctured. Also, the chips should not be cracked or have through-holes therein.

In order to provide the blistered surface, the oven toasting step is used. This oven toasting step case-hardens the raw dough piece, i.e. creates a hard surface layer while leaving a raw dough composition in the middle of the chip. In the subsequent final cooking step, namely frying, the surface of the tortilla chip becomes uniformly blistered with an array of surface blisters. The surface blisters are bubble-like voids extending away from the body of the chip, and preferably have a continuous curved wall, which is substantially semi-spherical or semi-ovoid, above the body of the chip. Some blisters may have a punctured wall, but preferably a majority of the blisters, i.e. at least 50% by number, are unpunctured during the manufacturing process. These blisters are formed by steam which is generated by cooking the moisture-containing dough; the steam is formed in the flexible starch matrix and then expands to form the blisters. If the oven toasting step is omitted, a "pillow" would be formed from the dough piece, by separation and expansion of the opposed outer surfaces of the dough piece. However, when oven toasting is employed, the case hardened outer surfaces provide a plurality of localised weak points, which result in the formation of a plurality of blisters. Nevertheless, the known toasting process tends to cause uneven drying on the surface of the chip, which in turn tends to provide a moisture gradient which leads to uncontrolled blister sizes on the chip surfaces after frying.

There is currently no known tortilla chip manufacturing method to produce tortilla chips with a controlled level of blistering which does not employ a toasting oven to carry out a preliminary toasting step prior to final cooking or which does not use fresh corn to produce a masa dough, as described above, immediately upstream of the cooking apparatus so that the dough comprises fresh corn.

If a masa dough using fresh corn is employed using only a frying step as the cooking step, and does not employ a toasting step, typically the resultant fried chip has an expanded pillow-like structure, i.e. a large central void surrounded by the interconnected peripheral edges of two opposed layers of the tortilla chip, or the tortilla chip does not exhibit any significant blistering. The toasting step is added to form case-hardened surfaces which then are readily able to form blisters in the subsequent frying step. However, the use of fresh corn and a toasting oven both increase the cost and complexity of the tortilla chip manufacturing line.

It is known to make tortilla chips using corn masa flour and without the use of fresh corn processed upstream of the dough manufacture. However, that process suffers from the problem that an oven toasting step is required to case harden the chips to control blistering. In addition, the tortilla chips tend to have a low blister count and an undesired grainy texture.

EP 0324460 A2 discloses a method for controlling the surface bubbling of fabricated snack food products comprising the steps of preparing a dough having from 30 to 55% moisture, forming the dough into a dough sheet having upper and lower dough surface portions and an inner dough portion, wherein the dough sheet has a thickness of from 0.5mm to 1.5mm, dividing the sheet into dough preforms, treating the dough preforms to reduce the moisture of the upper and lower dough surface portions to a moisture content substantially lower than that of the inner dough portion, and frying the dough. EP 0324460 A2 also discloses a dough comprising a dry mixture comprising approximately 17 wt.% pre-gelatinized flour (precooked corn flour and pre-gelatinized rice flour), approximately 15 wt.% ungelatinized starch (waxy maize starch) and 57 wt.% dry corn masa flour, and cold water. The dry ingredients and cold water are then mixed for 45 seconds to form a dough and subsequently sheeted and cut into triangle preforms. US 2002/018837 A1 discloses a method for preparing uniformly shaped snack chips, preferably tortilla-style chips, having raised surface features. In an exemplary embodiment, US 2002/018837 A1 discloses mixing a flour blend comprising 9.0 wt.% PreGelled Sago Palm Starch, 7.1 wt.% Native White Corn Flour, 73.2 wt.% White Corn Masa Flour, Modified Food Starch, and Resistant Starch with water, milling the dough, cutting the dough into isosceles triangle shapes and frying the dough to form a snack chip. US 4770891 A discloses a method of preparing an expanded fried cereal-based snack product comprising the steps of preparing a dough from dry solids consisting essentially of (a) one or more raw or partially gelatinized cereal flours providing a low water absorption component comprising from about 20% to about 80% by weight of the total dry solids; (b) one or more pregelatinized cereal starches or flours providing a high water absorption component comprising from about 10% to about 35% by weight of the total dry solids; and (c) a starch component comprising one or more ungelatinized starches comprising from about 10% to about 45% by weight of the total dry solids in the dough. The dry solids are combined with water to form a dough having a moisture content from about 35% to about 50% by weight of the dough. A dough piece formed by sheeting and cutting from the dough is fried in hot cooking oil to form a uniformly expanded fried snack product that expands from about 1.4 to about 2.5 times its original thickness during the frying step.

### Summary of the Invention

There is a need in the art to provide a method of manufacturing snack food chips, in particular tortilla chips, that can provide a product of highly acceptable appearance and morphology to the consumer, in particular with a controlled level of blistering, and which can be produced in an efficient and cost-effective manner.

The present invention aims at least partially to meet those needs.

The present invention accordingly provides a method of manufacturing snack food chips according to claim 1.

In a preferred embodiment of the present invention, the cold water swelling starch has a peak viscosity at a temperature of less than 50 °C, when measured by a rapid viscosity analyser (RVA) in excess water having a weight of water which is 3 times the weight of the cold water swelling starch.

In preferred embodiments of the present invention, in step i the first, second and third starch containing components are each dry ingredients and optionally are formed as a dry mixture for forming the dough in step ii.

In preferred embodiments of the present invention, step ii forms a dough wherein the dough comprises from 35 to 75 wt% corn masa flour, from 20 to 30 wt% of the second starch containing component, and from 5 to 30 wt% of the first starch-containing component, each based upon the weight of dry ingredients of the dough, and the dough comprises from 25 to 35 wt% added water, based on the weight of the dough, wherein the dough is formed at a temperature of up to 30 °C by mixing dry ingredients of the dough with water for a period of from 3 to 60 seconds, optionally from 3 to less than 60 seconds.

In a preferred embodiment of the present invention, in cooking step v the second starch containing component gelatinizes to form a continuous flexible starch matrix in which entrapped steam forms bubbles which cause expansion of the continuous flexible starch matrix.

In a preferred embodiment of the present invention, in step ii the dough is formed at a temperature of up to 30 °C, optionally from 5 to 20 °C, further optionally from 10 to 15 °C.

In preferred embodiments of the present invention, the second starch-containing component has a peak viscosity at a temperature of from 50 to 80 °C, optionally from 60 to 70 °C, when measured by a rapid viscosity analyser (RVA) in excess water having a weight of water which is 3 times the weight of the second starch-containing component.

In preferred embodiments of the present invention, the third starch-containing component further comprises at least one further corn ingredient, the further corn ingredient being selected from fresh corn masa, raw corn flour and cooked corn flour or any mixture of any two or more thereof. Optionally, the dough does not comprise a fresh corn masa ingredient. Such further corn ingredients may, individually or cumulatively, be included in the dough in a weight amount which is less than the weight of the corn masa flour.

In preferred embodiments of the present invention, the third starch-containing component has a peak viscosity at a temperature of greater than 80 °C, when measured by a rapid viscosity analyser (RVA) in excess water having a weight of water which is 3 times the weight of the third starch-containing component.

Typically, the dough comprises from 35 to 75 wt% corn masa flour, from 20 to 30 wt% of the second starch-containing component, and from 5 to 30 wt% of the first starch-containing component, each based upon the weight of the dry ingredients of the dough.

In preferred embodiments of the present invention, the dough comprises from 45 to 70 wt%, more preferably from 50 to 65 wt%, corn masa flour, based upon the weight of the dry ingredients of the dough.

In preferred embodiments of the present invention, the dough comprises 25 wt%, of the second starch-containing component, based upon the weight of the dry ingredients of the dough.

The second starch-containing component comprises tapioca cook-up starch and/or waxy corn cook-up starch.

In preferred embodiments of the present invention, the dough comprises from 5 to 20 wt%, more preferably from 10 to 15 wt%, typically about 12 wt%, of cold water swelling starch in the first starch-containing component, based upon the weight of the dry ingredients of the dough.

Typically, the first starch-containing component is selected from a pre-gelatinized cereal flour, a pre-gelatinized starch derivative, or any mixture thereof. The first starch-containing component may be at least one pre-gelatinized cereal flour selected from corn, wheat, barley, rice, spelt, or any other grain-derived product, or any mixture thereof. Preferably, the first starch-containing component is a pre-gelatinized corn flour.

In preferred embodiments of the present invention, the dough further comprises from 5 to 20 wt%, more preferably from 10 to 15 wt%, based upon the weight of the dry ingredients of the dough, of at least one cereal flour selected from wheat, barley, rice, spelt, or any other grain derived product, or any mixture thereof.

In preferred embodiments of the present invention, the cooking consists of frying and there is no oven or toasting step prior to the frying step.

In preferred embodiments of the present invention, the dough comprises from 25 to 30 wt% added water, typically from 25 to 30 wt% added water, based on the weight of the dough. The dough further comprises from 0.2 to 1.5 wt%, more preferably from 0.2 to 0.5 wt% of an emulsifier, which binds to free starch, based on the weight of the dough. The emulsifier is a monoglyceride-diglyceride emulsifier comprising a mixture of at least one monoglyceride and at least one diglyceride, optionally the monoglyceride-diglyceride emulsifier comprising or consisting of a food additive having E-number E471.

Preferably, the weight ratio of the added water: emulsifier in the dough is from 27:1 to 200:1, more preferably from 50:1 to 150:1, optionally from 75:1 to 125:1.

The monoglyceride-diglyceride emulsifier may be added to the dough as a liquid or as a solid, preferably as a liquid. In liquid form the monoglyceride-diglyceride emulsifier may be in melted form (for example heated to a temperature of 55 °C), or, less preferably, is mixed in a vegetable oil, such as rapeseed oil or sunflower oil, in particular high oleic acid sunflower oil (HOSO).

Typically, the corn masa flour has a particle size falling at least partly within the range extending from a fine particle corn masa, in which at most 30 wt% of the fine particle corn masa is retained on a 500 µm sieve and at least 25 wt% of the fine particle corn masa passes through a 250 µm sieve, to a coarse particle corn masa, in which at least 6 wt% of the coarse particle corn masa is retained on an 850 µm sieve and at most 35 wt% of the coarse particle corn masa passes through a 250 µm sieve.

Preferably, the corn masa flour is a mixture of two flours having respective particle sizes. Typically, the mixture comprises from 20 to 45 wt%, for example from 30 to 40 wt%, of a first corn masa and from 55 to 80 wt%, for example from 60 to 70 wt%, of a second corn masa, each wt% being based on the weight of the corn masa flour. The first corn masa preferably has a particle size range in which 0 wt% of the first corn masa is retained on a 2000 µm sieve, at most 11 wt% of the first corn masa is retained on an 841 µm sieve and at most 32 wt% of the first corn masa passes through a 149 µm sieve, and the second corn masa preferably has a particle size range in which 0 wt% of the second corn masa is retained on a 2000 µm sieve, at most 22 wt% of the second corn masa is retained on an 841 µm sieve and at most 26 wt% of the second corn masa passes through a 149 µm sieve.

In preferred embodiments of the present invention, the dough pieces have a thickness of from 0.5 to 1.5 mm, typically from 0.6 to 1 mm.

In preferred embodiments of the present invention, the dough pieces are shaped against a mould during frying so that the snack food chips are three-dimensionally shaped with a preset shape.

In preferred embodiments of the present invention, the cooking comprises or consists of frying and the frying temperature is from 160 to 200 °C, optionally from 170 to 190 °C, further optionally about 180°C.

In preferred embodiments of the present invention, the frying time is from 15 to 30 seconds, optionally from 16 to 25 seconds, further optionally from 18 to 23 seconds.

In preferred embodiments of the present invention, the dough is formed by mixing together the first, second and third starch-containing components to form a dry mix, and then mixing the dry mix with added water and liquid monoglyceride-diglyceride emulsifier to form the dough. Typically, the dry mix has a moisture content of from 5 to 20 wt% water in the dry ingredients (i.e. without addition of any added water in liquid form, which is later added to form the dough), optionally from 10 to 12 wt% water, based on the weight of the dry mix. Typically, when the dry mix is mixed with the added water and monoglyceride-diglyceride emulsifier to form the dough the dry mix has a temperature of from 5 to 30 °C, optionally from 5 to 25 °C, and the water has a temperature of from 5 to 15 °C, optionally from 7 to 12 °C, further optionally from 8 to 11 °C. Typically, the dry mix is mixed with the added water and monoglyceride-diglyceride emulsifier to form the dough for a period of from 3 to 30 seconds, optionally from 5 to 30 seconds.

In addition to the monoglyceride-diglyceride emulsifier which is employed to control blistering during cooking, the dough may optionally comprise a further emulsifier as a release agent to assist release of the dough from sheeting rolls and/or moulds for forming the chips. The release agent may comprise lecithin, added to the dough either as a solid powder (for example in the dry mix) or as a liquid (for example admixed with the water added to the dry mix to form the dough).

In preferred embodiments of the present invention, the snack food chip comprises a tortilla chip.

In preferred embodiments of the present invention, in a random population of 100 of the tortilla chips, more than 90% by number have a continuous wall without through-holes or cracks extending therethrough.

In preferred embodiments of the present invention, the tortilla chip has opposite major surfaces which have a plurality of blisters thereon, each blister extending outwardly on both opposite major surfaces.

In preferred embodiments of the present invention, for a sample of 6 randomly selected chips, the blisters have a mean total number of blisters per cm² of the opposite major surfaces of from 0.92 to 1.20, preferably from 1.00 to 1.20, with the blisters having a maximum width of 1.2 mm, optionally wherein for the sample of 6 randomly selected chips, the blisters include a mean total number of blisters having a maximum width of less than 0.5 mm of from 0.63 to 0.83, preferably from 0.68 to 0.78, blisters per cm², and a mean total number of blisters having a maximum width of from 0.5 to 1.2 mm of from 0.25 to 0.43, preferably from 0.30 to 0.38, blisters per cm².

The preferred embodiments of the present invention can provide a novel method of manufacturing a snack food chip, in particular a tortilla chip, which can exhibit a controlled level of blistering, in particular a uniform blister distribution over the chip surfaces, without employing a toasting or oven step prior to a frying step, the latter being the cooking step. Preferred embodiments of the present invention can provide that the controlled level of blistering is achieved without using fresh corn on the tortilla chip manufacturing line, i.e. without requiring a nixtamalization step carried out on fresh ground corn immediately prior to forming the dough. However, in some embodiments some fresh corn masa can be added to provide additional corn flavour and/or texture.

The absence of an oven or toasting unit and the absence of a corn soaking unit in the tortilla chip manufacturing line reduces the capital costs and running costs of the manufacturing line. Also, the absence of a corn soaking unit simplifies the tortilla chip manufacturing process.

Furthermore, the dough of the preferred embodiments has been found to be cohesive and readily sheetable at high speed and the dough can be formed very quickly, even in a period as low as 3 seconds. The sheetable dough provides that after frying, without requiring a preliminary oven or toasting step, and using a prefabricated commercially available corn masa flour, the tortilla chips do not exhibit any significant number of cracks or through-holes.

Without being bound by any theory, it is believed by the present inventors that the specific dough composition forms a continuous starch network from the initial cold water swelling starch, which has particles of corn masa distributed in the matrix. After cooking the tapioca starch expands and blisters are formed. Such a dough is cohesive and readily sheetable, and in turn permits the formation of a uniform and regular distribution of blisters during the frying process, and the absence of cracks or though-holes in the resultant tortilla chips.

The present invention is least partly predicated on the finding by the present inventors that by providing a dough comprising a first starch-containing component which includes cold water swelling starch (for example a pre-gelatinized flour), a second starch-containing component which comprises substantially ungelatinized starch which is tapioca cook-up starch and/or waxy corn cook-up starch, and a third starch-containing component which comprises corn masa flour and other minor ingredients, some of which may be corn-based, the dough can be formed, readily sheeted, cut into pieces and then fried. No toasting step is required and the dough does not need to comprise fresh corn. A prefabricated dried corn masa flour can be employed to provide the entire corn masa component of the tortilla chip. No corn soaking steps are required in the dough and tortilla chip manufacturing lines.

The first starch-containing component includes cold water swelling starch which forms a gel matrix for the dough. The cold water swelling starch has a peak viscosity at a temperature of less than 50 °C, when measured by a rapid viscosity analyser (RVA) in excess water having a weight of water which is 3 times the weight of the cold water swelling starch. This can provide a cohesive sheetable dough that can be formed at a low temperature, for example at about room temperature or lower. The dough is formed at a temperature below the gelation temperature of both the second starch-containing component which comprises substantially ungelatinized starch (for example tapioca and/or corn starch, such as cook-up starch), and the third starch containing component which comprises corn masa flour. The second starch-containing component has a peak viscosity at a temperature of from 50 to 80 °C, optionally from 60 to 70 °C, when measured by a rapid viscosity analyser (RVA) in excess water having a weight of water which is 3 times the weight of the second starch-containing component. The third starch containing component has a peak viscosity at a temperature of greater than 80 °C, when measured by a rapid viscosity analyser (RVA) in excess water having a weight of water which is 3 times the weight of the third starch-containing component. When the dough is cooked, for example by frying, the dough is heated to a temperature above the gelatinization temperatures of the second starch-containing component and the peak RVA viscosity of the third starch containing component.

Since the second starch-containing component has a peak RVA viscosity temperature below the peak RVA viscosity temperature of the corn masa, the second starch-containing component which comprises tapioca cook-up starch and/or waxy corn cook-up starch, rapidly absorbs water from the dough at the elevated cooking temperature, gelatinizes and expands due to the generation of steam. In the cooking step the second starch-containing component gelatinizes to form a continuous flexible starch matrix in which entrapped steam forms bubbles which cause expansion of the continuous flexible starch matrix. The water absorption of the second starch-containing component occurs preferentiallv to the water absorption of the corn masa of the third starch-containing component, which has a higher peak RVA viscosity temperature, and so the water in the dough is absorbed by the second starch-containing component, leaving the corn masa of the third starch-containing component as particles dispersed throughout the starch matrix and having little or substantially no water absorption in the corn masa.

Since the second starch-containing component is distributed homogeneously throughout the dough, the gelatinization occurs throughout the dough to form an expanded starch matrix together with the first starch-containing component. The expanded matrix forms a typical expanded and crunchy texture associated with tortilla chips. The substantially uniform gelatinization provides a plurality of nucleation sites for steam generation as the dough is rapidly dehydrated during cooking. The steam generated forms a substantially uniform array of a plurality of blisters, of substantially uniform size distribution, on opposite surfaces of the chip. Steam generation does not tend to occur at the corn masa particles, which may otherwise cause a non-uniform blister morphology and may cause local stresses in the matrix which could form through-holes or cracks in the cooked chip.

The corn masa remains as particles which are substantially free of absorbed water and so does not form part of the starch matrix, but instead forms a substantially uniform distribution of particles in the matrix. The corn masa particles can provide a tortilla chip taste and crunch to the chip.

Accordingly, by providing three starch components having different peak RVA viscosity temperature characteristics, a sheetable dough can be formed at low temperature and a snack food chip with a corn taste and mouthfeel characteristics, exhibiting a substantially uniform surface blistering and substantially without through-holes or cracks, can be manufactured.

The preferred embodiments of the present invention can further provide a method for manufacturing three-dimensionally shaped snack food chips, such as tortilla chips, which exhibit the desired blistering. The shaped tortilla chips can be manufactured at low production costs as well as low capital expenditure. The dough pieces can be shaped by a mould during the frying process. The resultant tortilla chips may have any desired two dimensional plan shape, such as triangular, and any desired three dimensional shape, such as being regularly curved so that a plurality of the tortilla chips are mutually stackable.

Although the invention has particular application to the manufacture of shaped tortilla chips, the method or the present invention may be used to produce a variety of different snack food chip compositions, as well and shapes. For example, the snack food chip may comprise, in addition to corn masa, any cereal-based composition, and may comprise any of, any mixture of, or all of, wheat, barley, rice or any other grain-derived product, as well as any seasoning, either within the cereal-based composition and/or applied as a topical seasoning.

The snack food chips may be provided with other product design features to improve eating quality, for example particular flavourings or texturizing components. The snack food chips may be provided in a consumer acceptable retail format, for example a packaging such as a bag or carton, typically hermetically sealed, which is compatible with a retail sales environment.

### Brief Description of the Drawings

Embodiments of the present invention will now be described by way of example only with reference to the accompanying drawings, in which:
Figure 1 schematically illustrates a process flow of a method for manufacturing snack food chips in accordance with an embodiment of the present invention;
Figure 2 schematically illustrates a cross-section of a snack food chip in accordance with an embodiment of the present invention; and
Figure 3 is a graph illustrating the variation of viscosity with time during RVA analysis for the first, second and third starch components used in accordance with an embodiment of the present invention.

### Detailed Description of the Invention

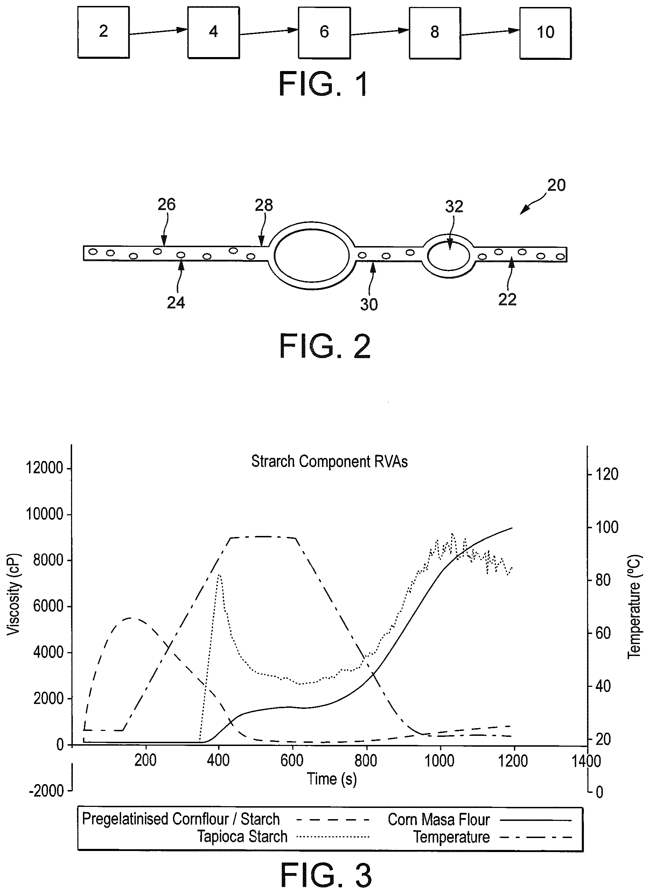

Referring to Figure 1 of the accompanying drawings, there is shown a process flow of a method for manufacturing snack food chips, in particular tortilla chips, in accordance with an embodiment of the present invention.

In the method, in a first step 2 a number of starch-containing components are provided. These comprise a first starch-containing component which includes cold water swelling starch, a second starch-containing component which comprises substantially ungelatinized starch, and a third starch-containing component which comprises corn masa flour.

The third starch-containing component may optionally further comprise at least one further corn ingredient, the further corn ingredient being selected from fresh corn masa, raw corn flour and cooked corn flour or any mixture of any two or more thereof. The fresh corn masa may be added to enhance the corn taste of the chip, although then the additional fresh corn ingredient needs to be provided in the production line. The corn masa typically has a moisture content of about 50 wt% based on the total weight of the corn masa. Typically, the dough does not comprise a fresh corn masa ingredient, because the corn masa flour can provide a good corn taste, and the desired material properties in the dough and chip, and also because the provision of fresh corn can be avoided. The raw corn flour and cooked corn flour can provide some corn taste at lower cost than corn masa and with reduced flavour as compared to corn masa. Such further corn ingredients may, individually or cumulatively, be included in the dough in a weight amount which is less than the weight of the corn masa flour.

In a second step 4 a dough is formed from a mixture of the first, second and third starch containing components and added water. The dough is typically formed by mixing together the first, second and third starch-containing components to form a dry mix, and then mixing the dry mix with added water, and an emulsifier, to form the dough. Typically, the dough is formed at a temperature of up to 30 °C, optionally from 5 to 20 °C, further optionally from 10 to 15 °C.

Typically, the dry mix has a moisture content of from 5 to 20 wt% water in the dry ingredients (i.e. without addition of any added water in liquid form, which is later added to form the dough), optionally from 10 to 12 wt% water, based on the weight of the dry mix. Typically, when the dry mix is mixed with the added water, and emulsifier, to form the dough the dry mix has a temperature of from 5 to 30 °C, optionally from 5 to 25 °C, and the added water has a temperature of from 5 to 15 °C, optionally from 7 to 12 °C, further optionally from 8 to 11 °C. Typically, the dry mix is mixed with the added water and emulsifier to form the dough for a period of from 3 to 30 seconds, typically from 5 to 30 seconds.

Typically, the dough comprises from 35 to 75 wt% corn masa flour, from 20 to 30 wt% of the second starch-containing component, and from 5 to 30 wt% of the first starch-containing component, each based upon the weight of the dry ingredients of the dough.

The cold water swelling starch of the first starch-containing component forms a gel matrix in the dough. The dough preferably comprises from 5 to 20 wt%, more preferably from 10 to 15 wt%, typically about 12 wt%, of cold water swelling starch in the first starch-containing component, based upon the weight of the dry ingredients of the dough.

Typically, the first starch-containing component is selected from a pre-gelatinized cereal flour, a pre-gelatinized starch derivative, or any mixture thereof. The component including cold water swelling starch may be at least one selected pre-gelatinized cereal flour selected from corn, wheat, barley, rice, spelt, or any other grain-derived product, or any mixture thereof. Preferably, the component including cold water swelling starch is a pre-gelatinized corn flour.

The dough preferably comprises from 20 to 30 wt%, typically about 25 wt%, of the second starch-containing component, based upon the weight of the dry ingredients of the dough. The second starch-containing component comprises tapioca cook-up starch and/or waxy corn cook-up starch.

The dough preferably comprises from 45 to 70 wt%, more preferably from 50 to 65 wt%, corn masa flour, based upon the weight of the dry ingredients of the dough.

Typically, the corn masa flour has a particle size falling at least partly within the range extending from a fine particle corn masa, in which at most 30 wt% of the fine particle corn masa is retained on a 500 µm sieve and at least 25 wt% of the fine particle corn masa passes through a 250 µm sieve, to a coarse particle corn masa, in which at least 6 wt% of the coarse particle corn masa is retained on an 850 µm sieve and at most 35 wt% of the coarse particle corn masa passes through a 250 µm sieve.

Preferably, the corn masa flour is a mixture of two flours having respective particle sizes. Typically, the mixture comprises from 20 to 45 wt%, for example from 30 to 40 wt%, of a first corn masa and from 55 to 80 wt%, for example from 60 to 70 wt%, of a second corn masa, each wt% being based on the weight of the corn masa flour. The first corn masa preferably has a particle size range in which 0 wt% of the first corn masa is retained on a 2000 µm sieve, at most 11 wt% of the first corn masa is retained on an 841 µm sieve and at most 32 wt% of the first corn masa passes through a 149 µm sieve, and the second corn masa preferably has a particle size range in which 0 wt% of the second corn masa is retained on a 2000 µm sieve, at most 22 wt% of the second corn masa is retained on an 841 µm sieve and at most 26 wt% of the second corn masa passes through a 149 µm sieve.

The cold water swelling starch has a peak viscosity at a temperature of less than 50 °C. The second starch-containing component has a peak viscosity at a temperature of from 50 to 80 °C, optionally from 60 to 70 °C. The third starch-containing component has a peak viscosity at a temperature of greater than 80 °C. In each case, the viscosity is measured by a rapid viscosity analyser (RVA) in excess water having a weight of water which is 3 times the weight of the third starch-containing component. In particular, it this specification the viscosity was measured on a Perten Instruments RVA 4500 rapid viscosity analyser and Thermocline for Windows (TCW) software as described at http://www.perten.com/products/rapid-viscoanalyser-rva/features-and-benefits/), using a stirring speed of 960 rpm for the first 10 seconds and then 160 rpm thereafter. The sample to be tested was corrected for moisture content using the formula: Compensated Sample Weight = (actual (uncompensated) sample weight x 100)/(100 - wright % moisture content of sample) where the actual (uncompensated) sample weight is 3 grams. The weight of the water used for the rapid viscosity analysis was (28 grams - actual (uncompensated) sample weight in grams).

Figure 3 is a graph illustrating the variation of viscosity with time during RVA analysis for the first, second and third starch components used in accordance with an embodiment of the present invention.

In Figure 3, each of (i) the pregelatinized corn flour, (ii) the tapioca starch and (iii) the corn masa flour were individually subjected to RVA analysis. The viscosity (left-hand y axis) was measured over time (x-axis) and the respective sample was subjected to the temperature profile indicated (right-hand y axis).

It can be seen that (i) the pregelatinized corn flour has a viscosity peak when the temperature is below 50 °C (ii) the tapioca starch has a viscosity peak when the temperature is above 50 °C and below 80 °C and (iii) the corn masa flour has a viscosity peak when the temperature is above 80 °C (in fact, the corn masa did not peak even when the temperature profile attained a maximum temperature of 95 °C). Each of these peaks is representative of the gelatinization temperature or peak water absorption of the respective starch.

In some embodiments of the present invention, the dough further comprises from 5 to 20 wt%, more preferably from 10 to 15 wt%, based upon the weight of the dry ingredients of the dough, of at least one cereal flour selected from wheat, barley, rice, spelt, or any other grain-derived product, or any mixture thereof. Other ingredients known for use in snack food chips, in particular tortilla chips, may be incorporated into the dough, typically into the dry mix.

In the most preferred embodiments of the present invention, the dough does not comprise a fresh corn masa ingredient.

The dough preferably comprises from 25 to 35 wt% added water, typically from 25 to 30 wt% added water, based on the weight of the dough. The dough further comprises from 0.2 to 1.5 wt%, more preferably from 0.2 to 0.5 wt% of an emulsifier, based on the weight of the dough. Preferably, the weight ratio of the added water: emulsifier in the dough is from 25:1 to 200:1, more preferably from 50:1 to 150:1, yet more preferably from 75:1 to 125:1. The emulsifier is adapted to bind to free starch and is a monoglyceride-diglyceride emulsifier comprising a mixture of at least one monoglyceride and at least one diglyceride, optionally the monoglyceride-diglyceride emulsifier comprising or consisting of a food additive having E-number E471. The monoglyceride-diglyceride emulsifier may be added to the dough as a liquid or, less preferably, as a solid, and when added as a liquid is optionally melted (for example at a temperature of about 55 °C) or then mixed with a vegetable oil, such as rapeseed oil or sunflower oil, in particular high oleic acid sunflower oil (HOSO), and the liquid emulsifier/oil mixture is then added to the dough. However, it is preferred to add the monoglyceride-diglyceride emulsifier to the dough as a liquid but not in an oil vehicle, since additional oil tends to decrease sheet cohesiveness and the resultant chips may have an increase incidence of through-holes and cracks or chip breakage.

In the monoglyceride-diglyceride emulsifier, the monoglyceride component functions to complex to the free starch, which controls blister formation and the diglyceride component functions to reduce the melting temperature of the monoglyceride-diglyceride emulsifier so that it can more readily be added in the form of a liquid. The monoglyceride component is provided in a concentration which is sufficiently high to control blister formation but not so high that so much free starch has been complexed that there is insufficient free starch remaining in the dough for expansion of the second starch-containing component, to cause expansion of the starch matrix during frying.

After formation of the dough, in a third step 6 a dough sheet is formed from the dough and then in a fourth step 8 a plurality of dough pieces are cut from the dough sheet. Preferably, the dough pieces have a thickness of from 0.5 to 1.5 mm, typically from 0.6 to 1 mm. In preferred embodiments of the invention, the dough sheet is formed in a sheeting apparatus at a linear speed for the sheet of from 20 to 60 linear metres/minute, optionally from 30 to 50 linear metres/minute. High speed sheeting to form a thin dough sheet is possible because the dough has high cohesiveness, and does not rip, tear or form holes during sheeting. This is a very high speed sheeting operation as compared to the typical manufacture of tortilla chips of similar sheet thickness since traditional tortilla chip dough, including a high proportion of fresh corn masa, has low cohesion, and so linear sheet speeds are typically only 15 linear metres/minute or less.

The dough pieces are two-dimensionally pre-shaped, and cut into desired two-dimensional shape and dimensions. Initially the dough pieces are typically substantially planar and flexible. The dough pieces may be regularly shaped, for example being triangular, square, rectangular, elliptical, etc., or be irregularly shaped. Typically, the dough pieces have a surface area of from 1000 to 2500 mm² and a maximum dimension of from 30 to 100 mm.

Subsequently, in a fifth step 10 the dough pieces are cooked to form a plurality of snack food chips. Preferably, the cooking comprises or consists of frying and the frying temperature is from 160 to 200 °C, optionally from 170 to 190 °C, further optionally about 180 °C. The frying time is from 15 to 30 seconds, optionally from 16 to 25 seconds, further optionally from 18 to 23 seconds.

Most preferably, the cooking consists of frying and there is no toasting step prior to the frying step. Alternatively, other cooking techniques apart from frying, such as baking, microwaving, etc. may be used instead of frying.

The dough pieces may be shaped against a mould during frying so that the snack food chips are three-dimensionally shaped with a preset shape, for example as disclosed in US- A2008/0044534. The snack food chips made according to the method of the present invention may be shaped and dimensioned so as to be suitable for use together with a dip, such as a salsa composition, cream cheese, avocado composition, etc. which are well known in the snack food art.

For the manufacture of tortilla chips, it is known to prove the dough prior to frying. In alternative embodiments therefore, the shaped dough pieces may be conveyed through a proving chamber in which the shaped dough pieces are subjected to controlled temperature and humidity to prove the dough prior to cooking, as is generally known to those skilled in the art of making tortilla chips.

The first starch-containing component includes cold water swelling starch which forms a gel matrix for the dough to provide a sheetable dough that can be formed at a low temperature, for example at about room temperature or lower.

An emulsifier is present in the dough which is adapted to bind to free starch. The emulsifier is a monoglyceride-diglyceride emulsifier comprising a mixture of at least one monoglyceride and at least one diglyceride, optionally the monoglyceride-diglyceride emulsifier comprising or consisting of a food additive having E-number E471. The emulsifier can mop up and bind to free starch in the dough. The lower the free starch, the lower the expansion on frying and the lower the blister formation. The monoglyceride-diglyceride emulsifier therefore can control the level of expansion and blistering. The second starch-containing component is uniformly distributed throughout the starch matrix, which in turn enhances the uniform formation of blisters during cooking.

The cold water swelling starch is the only starch component of the first, second and third starch components which absorbs water prior to cooking of the dough. At the start of cooking, the second, cook-up, starch, for example tapioca starch, starts to absorb water because it has a higher peak viscosity RVA temperature than the cold water swelling starch but a lower peak viscosity RVA temperature than the corn masa. The corn masa therefore does not absorb water because the water is preferentially absorbed by the cook-up tapioca starch. When the dough is cooked, the dough is heated to a temperature above the peak viscosity RVA temperatures of both of the second and third starch-containing components. When the second starch-containing component has a peak viscosity RVA temperature below the peak viscosity RVA temperature of the corn masa, the second starch-containing component, for example tapioca cook-up starch and/or waxy corn cook-up starch, rapidly absorbs water from the dough at the elevated cooking temperature, gelatinizes and expands in volume due to the generation of steam. The gelatinization of the second starch-containing component occurs preferentiallv to the viscosity increase of the corn masa of the third starch containing component, which has a higher peak viscosity RVA temperature, and so the water in the dough is absorbed by the second starch-containing component, leaving the corn masa of the third starch-containing component substantially unincreased in viscosity and with low water absorption. The corn masa forms a substantially uniform distribution of particles in the starch matrix. The corn masa particles can provide a tortilla chip taste and crunch to the chip.

Since the second starch-containing component is distributed homogeneously throughout the dough, the gelatinization occurs throughout the dough to form an expanded starch matrix together with the first starch-containing component. The expanded matrix forms a light and crunchy texture. The substantially uniform gelatinization provides a plurality of nucleation sites for steam generation as the dough is rapidly dehydrated during cooking. The steam generated forms a substantially uniform array of a plurality of blisters, of substantially uniform size distribution, on opposite surfaces of the chip. Steam generation does not tend to occur at the corn masa particles, which may otherwise cause a non-uniform blister morphology and may cause local stresses in the matrix which could form through-holes or cracks in the cooked chip.

As illustrated in Figure 2, which is not to scale, the resultant snack food chip 20, preferably a tortilla chip, comprises a starch matrix 22 composed of at least one gelatinized and expanded starch, and a plurality of particles 24 distributed in the starch matrix 24. The particles 24 are composed of a third starch-containing component which comprises corn masa which is substantially ungelatinized. The starch matrix 22 forms a continuous wall 26 without through holes or cracks extending therethrough. The snack food chip 20 has a wall thickness of from 0.5 to 1.5 mm. The snack food chip 20 has having opposite major surfaces 28, 30 which have a plurality of blisters 32 thereon, each blister 32 extending outwardly on both opposite major surfaces 28, 30.

The blisters can readily be detected visually using the naked eye, because of their size. The blisters are aesthetically pleasing on the surfaces of a tortilla chip. For the blisters, the maximum width dimension is typically 1.2 mm and the minimum width dimension is typically 0.5 mm (any smaller sized blisters are essentially not visible to the naked eye). The total number of the various sizes of blisters can readily be detected using a 3-D scanner and a blister number per unit area can be calculated. Since each blister extends outwardly on both surfaces, the blister number per unit area is the number per unit area of one surface of the chip.

In preferred embodiments, for a sample of 6 randomly selected chips, the blisters 32 have a mean total number of blisters per cm² of the opposite major surfaces 28, 30 of from 0.92 to 1.20, preferably from 1.00 to 1.20, with the blisters 32 having a maximum width of 1.2 mm. Typically, for the sample of 6 randomly selected chips, the blisters 32 include a mean total number of blisters 32 having a maximum width of less than 0.5 mm of from 0.63 to 0.83, preferably from 0.68 to 0.78, blisters per cm², and a mean total number of blisters 32 having a maximum width of from 0.5 to 1.2 mm of from 0.25 to 0.43, preferably from 0.30 to 0.38, blisters per cm².

In a random population of 100 of the tortilla chips produced according to preferred embodiments of the method of the present invention, more than 90% by number have a continuous wall 26 without through-holes or cracks extending therethrough.

### Examples

The present invention is now illustrated further with reference to the following non-limiting Examples.

### Example 1

Example 1 produced a tortilla chip using the ingredients listed in Table 1.

**Table 1**

| | Example 1 | Example 2 | Example 3 | Example 4 | Example 5 | Comp. Ex. 1 |
|---|---|---|---|---|---|---|
| | Wt% | Wt% | Wt% | Wt% | Wt% | |
| Dry mixture | | | | | | |
| Corn Masa US #9 | 21.6 | 30.0 | 0 | 0 | 0 | 0 |
| Corn Masa US #2 | 40.0 | 31.60 | 0 | 0 | 0 | 0 |
| Corn masa FINA | 0 | 0 | 48.8 | 63.8 | 48.8 | 0 |
| Corn masa (fine) | 0 | 0 | 0 | 0 | 0 | 52.0 |
| Corn masa (coarse) | 0 | 0 | 0 | 0 | 0 | 13.0 |
| Pregelatinized corn flour | 12.0 | 12.0 | 12.0 | 12.0 | 12.0 | 15.0 |
| Tapioca starch | 25.0 | 25.0 | 25.0 | 10.0 | 25.0 | 0 |
| Rice flour | 0 | 0 | 12.3 | 12.3 | 12.3 | 16.6 |
| Black bean flake | 1.0 | 1.0 | 1.0 | 1.0 | 1.0 | 2.5 |
| Dry sunflower lecithin | 0.4 | 0.4 | 0.4 | 0.4 | 0.4 | 0.4 |
| Extra fine salt | 0 | 0 | 0.5 | 0.5 | 0.5 | 0.5 |
| Total dry mixture | 100.0 | 100.0 | 100.0 | 100.0 | 100.0 | 100.00 |
| | | | | | | |

| Dough mix | | | | | | |
|---|---|---|---|---|---|---|
| Dry powder mixture | 70.75 | 68.60 | 68.60 | 68.60 | 74.30 | 76.10 |
| Liquid mono-diglyceride emulsifier (E471) in rapeseed oil | 0.94 | 0.91 | 0.90 | 0.90 | 1.00 | 0.80 |
| Added water | 28.30 | 30.49 | 30.50 | 30.50 | 24.80 | 23.10 |
| Total dough mix | 100.00 | 100.00 | 100.00 | 100.00 | 100.00 | 100.00 |

In Example 1, as listed in Table 1 the ingredients of the dry mixture, namely the flour components comprising corn masa flour and, as a cold water selling starch, the pregelatinized corn flour, the dry additives comprising tapioca starch, black bean flake and dry sunflower lecithin, were mixed to form a dry mixture.

Separately, an emulsifier ingredient was formed by melting a monoglyceride-diglyceride emulsifier, in particular E471, by heating the solid emulsifier at a temperature of 55 °C, and then mixing the molten emulsifier with rapeseed oil. The emulsifier ingredient comprised 50 wt% monoglyceride-diglyceride emulsifier and 50 wt% in rapeseed oil, each based on the weight of the emulsifier ingredient.

The dry mixture and the emulsifier ingredient were mixed together with the added water to form a dough. The dry mixture has a temperature of 20 to 25 °C, the added water had a temperature of 2 to 10 °C, and the resultant dough mixture was formed at a temperature of 10 to 15 °C. The dough was mixed for less than 5 seconds.

The resultant dough was sheeted through a dough sheeter to a thickness of 0.7 mm. The dough sheet was formed in a sheeting apparatus at a linear speed for the sheet of from 30 to 50 linear metres/minute.

The dough sheet was cut into triangular tortilla chip-shaped dough pieces which were then fried in sunflower oil at 185 °C for a period of about 25 seconds, and then topically seasoned. The resultant tortilla chips had a moisture content of 1.5 to 2.0 wt%, based on the total weight of the tortilla chips.

The resultant tortilla chips had a crispy and crunchy texture. In particular, the opposite surfaces of the tortilla chips had a uniform distribution of blisters. The blisters are formed by steam which is rapidly generated during the frying process. Without being bound by any theory, it is believed that the steam is formed substantially uniformly throughout the dough matrix because the ungelatinized corn masa particles act as initiation points from steam formation. Since there is a uniform distribution of corn masa particles throughout the dough, the steam generation is correspondingly uniform, and a large number of substantially similar-sized blisters is formed on the surfaces of the chip. Also, the pregelatinized corn flour and the tapioca starch provide a starch matrix which is gelatinized in the frying process, and the starch matrix can be substantially uniformly deformed to form the distribution of blisters. The liquid emulsifier in the starch matrix is also believed to assist in achieving a uniform blister distribution and an expanded starch matrix in the resultant tortilla chip.

The tortilla chip also did not exhibit any holes or cracks extending through the thickness of the tortilla chip. There was a continuous expanded starchy matrix, with a distribution of substantially unexpanded corn masa particles throughout the matrix. The tortilla chips had a good corn taste.

The corn masa flour was a mixture of two flours having respective particle sizes. In this recipe the corn masa comprised 65% of finer corn masa flour, the US #2 corn masa flour, and 35% of coarser corn masa flour, the US #9 corn masa flour, each based on the weight of the corn masa flour. The finer corn masa flour had a particle size range in which 0 wt% of the corn masa is retained on a 2000 µm sieve, at most 11 wt% of the corn masa is retained on an 841 µm sieve and at most 32 wt% of the corn masa passes through a 149 µm sieve. The coarser corn masa flour had a particle size range in which 0 wt% of the corn masa is retained on a 2000 µm sieve, at most 22 wt% of the corn masa is retained on an 841 µm sieve and at most 26 wt% of the corn masa passes through a 149 µm sieve.

In this recipe the weight ratio of added water: liquid emulsifier was 30:1.

The corn masa flour and the liquid emulsifier were both found to control the amount and uniformity of blistering on the surface of the tortilla chips. It was found that increasing the proportion and amount of coarse corn masa flour particles tended to increase the uniformity of blistering and a reduction in the occurrence of individual large blisters. The liquid emulsifier tended to increase the uniformity of blistering on the surface of the tortilla chips.

The black bean flake component, which is known for use in tortilla chips, was added to provide a distribution of fine back particles in the tortilla chips to provide increases texture and visual contrast. The dry sunflower lecithin was added to assist release of the sheet from the sheeting rolls.

### Example 2

Example 2 produced a tortilla chip using the ingredients listed in Table 1. The processing was as set out above for Example 1. The tortilla chip had a good level of blistering, but slightly less uniform, generally larger and with a reduced number per unit area as compared to Example 1. It is believed that the reduced concentration of the coarser corn masa flour led to the reduced blister uniformity in size and distribution.

### Example 3

Example 3 produced a tortilla chip using the ingredients listed in Table 1. The processing was as set out above for Example 1. The tortilla chip had a good level of blistering, but less uniform, generally larger and with a reduced number per unit area as compared to Example 1.

### Example 4

Example 4 produced a tortilla chip using the ingredients listed in Table 1. The processing was as set out above for Example 1. The tortilla chip had a uniform mid-size blisters, but less uniform, generally larger and with a reduced number per unit area as compared to Example 3. Also, the chip matrix was less expanded as compared to Example 3, which is believed to result from a lower concentration of tapioca starch in the dough.

### Example 5

Example 5 produced a tortilla chip using the ingredients listed in Table 1. The processing was as set out above for Example 1. The tortilla chip had some blisters, but reduced as compared to Example 3. Also, the chip matrix was less expanded as compared to Example 3, even with a slightly higher concentration of liquid emulsifier in the dough, which lower expansion is believed to result from a lower water: liquid emulsifier weight ratio of 25:1 as compared to 33:1 for Example 3.

### Comparative Example 1

Comparative Example 1 produced a tortilla chip using the ingredients listed in Table 1. The processing was as set out above for Example 1. The recipe excluded tapioca starch. The tortilla chip had a poorly expanded matrix, which was unacceptable.

Thus there was no component comprising a "cook-up" starch which was substantially ungelatinized in the dough but during frying gelatinizes and expands in volume. This Comparative Example illustrate that such a "cook-up" starch provides the required expanded starch matrix in the tortilla chip.

Various other modifications to the present invention will be readily apparent to those skilled in the art.

## Claims

1. A method of manufacturing snack food chips, the method comprising the steps of:
i. providing a first starch-containing component which comprises a cold water swelling starch, a second starch-containing component which comprises substantially ungelatinized starch, and a third starch-containing component which comprises corn masa flour;
ii. forming a dough from a mixture of the first, second and third starch-containing components and water, wherein the dough comprises from 20 to 30% of the second starch-containing component based upon the weight of the dry ingredients in the dough, the cold water swelling starch forming a gel matrix in the dough;
iii. forming a dough sheet from the dough;
iv. cutting a plurality of dough pieces from the dough sheet; and
v. cooking the dough pieces to form a plurality of snack food chips, the cooking step being carried out to cause the substantially ungelatinized starch in the second starch-containing component to gelatinize, the snack food chips comprising a starch matrix formed from the first and second starch-containing components, and corn masa particles dispersed in the starch matrix;
wherein the second starch-containing component is selected from tapioca cook-up starch and/or waxy corn cook-up starch;
wherein the dough further comprises from 0.2 to 1.5 wt% of an emulsifier which binds to free starch, based on the weight of the dough, wherein the emulsifier is a monoglyceride-diglyceride emulsifier comprising a mixture of at least one monoglyceride and at least one diglyceride.

2. A method according to claim 1 wherein:
i) the cold water swelling starch has a peak viscosity at a temperature of less than 50 °C, when measured by a rapid viscosity analyser (RVA) in excess water having a weight of water which is 3 times the weight of the cold water swelling starch; and/or
(ii) the second starch-containing component has a peak viscosity at a temperature of from 50 to 80 °C, when measured by a rapid viscosity analyser (RVA) in excess water having a weight of water which is 3 times the weight of the second starch-containing component; and/or
(iii) wherein the third starch-containing component has a peak viscosity at a temperature of greater than 80 °C, when measured by a rapid viscosity analyser (RVA) in excess water having a weight of water which is 3 times the weight of the third starch-containing component.

3. A method according to claim 2 wherein the second starch-containing component has a peak viscosity at a temperature of from 60 to 70 °C, when measured by a rapid viscosity analyser (RVA) in excess water having a weight of water which is 3 times the weight of the second starch-containing component.

4. A method according to any one of claims 1 to 3 wherein the monoglyceride-diglyceride emulsifier comprises or consists of a food additive having E-number E471, optionally wherein:
i) the dough comprises from 0.2 to 0.5 wt% of the emulsifier, based on the weight of the dough; and/or
ii) the weight ratio of the added water: emulsifier in the dough is from 25: 1 to 200: 1, further optionally wherein the weight ratio of the added water: emulsifier in the dough is from 50: 1 to 150: 1, yet further optionally from 75: 1 to 125: 1.

5. A method according to any one of claims 1 to 4 wherein:
i) in cooking step v the second starch- containing component gelatinizes to form a continuous flexible starch matrix in which entrapped steam forms bubbles which cause expansion of the continuous flexible starch matrix; and the corn masa remains as particles which are substantially free of absorbed water and so does not form part of the starch matrix; and/or
ii) in step ii the dough is formed at a temperature of up to 30 °C, optionally from 5 to 20 °C, further optionally from 10 to 15 °C; and/or
iii) the cooking consists of frying and there is no oven or toasting step prior to the frying step; and/or
iv) the dough comprises from 25 to 35 wt% added water, optionally from 25 to 30 wt% added water, based on the weight of the dough.

6. A method according to any one of claims 1 to 5 wherein:
i) the third starch-containing component further comprises at least one further corn ingredient, the further corn ingredient being selected from fresh corn masa, raw corn flour and cooked corn flour or any mixture of any two or more thereof; and/or
ii) the dough does not comprise a fresh corn masa ingredient; and/or
iii) the first starch-containing component is selected from a pre-gelatinized cereal flour, a pre-gelatinized starch derivative, or any mixture thereof, optionally wherein the first starch-containing component is at least one pre-gelatinized cereal flour selected from corn, wheat, barley, rice, spelt, or any other grain-derived product, or any mixture thereof, further optionally wherein the first starch-containing component is a pre- gelatinized corn flour; and/or
iv) the dough further comprises from 5 to 20 wt%, optionally from 10 to 15 wt%, based upon the weight of the dry ingredients of the dough, of at least one cereal flour selected from wheat, barley, rice, spelt, or any other grain-derived product, or any mixture thereof.

7. A method according to any one of claims 1 to 6 wherein:
i) the dough comprises from 35 to 75 wt% corn masa flour and from 5 to 30 wt% of the first starch-containing component, each based upon the weight of the dry ingredients of the dough, optionally wherein the dough comprises from 45 to 70, further optionally from 50 to 65 wt%, corn masa flour, based upon the weight of the dry ingredients of the dough; and/or
ii) wherein the dough comprises 25 wt%, of the second starch-containing component, based upon the weight of the dry ingredients of the dough; and/or
iii) the dough comprises from 5 to 20 wt% of cold water swelling starch in the first starch-containing component, based upon the weight of the dry ingredients of the dough, optionally wherein the dough comprises from 10 to 15 wt%, further optionally about 12 wt%, of cold water swelling starch in the first starch-containing component, based upon the weight of the dry ingredients in the dough.

8. A method according to any one of claims 1 to 7 wherein the corn masa flour has a particle size falling at least partly within the range extending from a fine particle corn masa, in which at most 30 wt% of the fine particle corn masa is retained on a 500 µm sieve and at least 25 wt% of the fine particle corn masa passes through a 250 µm sieve, to a coarse particle corn masa, in which at least 6 wt% of the coarse particle corn masa is retained on an 850 µm sieve and at most 35 wt% of the coarse particle corn masa passes through a 250 µm sieve.

9. A method according to any one of claims 1 to 8 wherein the corn masa flour is a mixture of two flours having respective particle sizes, optionally the mixture comprising from 20 to 45 wt%, typically from 30 to 40 wt%, of a first corn masa and from 55 to 80 wt%, typically from 60 to 70 wt%, of a second corn masa, each wt% being based on the weight of the corn masa flour, the first corn masa having a particle size range in which 0 wt% of the first corn masa is retained on a 2000 µm sieve, at most 11 wt% of the first corn masa is retained on an 841 µm sieve and at most 32 wt% of the first corn masa passes through a 149 µm sieve, and the second corn masa having a particle size range in which 0 wt% of the second corn masa is retained on a 2000 µm sieve, at most 22 wt% of the second corn masa is retained on an 841 µm sieve and at most 26 wt% of the second corn masa passes through a 149 µm sieve.

10. A method according to any one of claims 1 to 9 wherein the dough sheet has a thickness of from 0.5 to 1.5 mm, optionally from 0.6 to 1 mm.

11. A method according to any one of claims 1 to 10 wherein:
i) in step iii the dough sheet is formed in a sheeting apparatus at a linear speed for the sheet of from 20 to 60 linear metres/minute, optionally from 30 to 50 linear metres/minute; and/or
ii) the dough pieces are shaped against a mould during frying so that the snack food chips are three-dimensionally shaped with a preset shape.

12. A method according to any one of claims 1 to 11 wherein the cooking comprises or consists of frying and the frying temperature is from 160 to 200 °C, optionally from 170 to 190 °C, further optionally about 180 °C, optionally wherein the frying time is from 15 to 30 seconds, optionally from 16 to 25 seconds, further optionally from 18 to 23 seconds.

13. A method according to any foregoing claim wherein the dough is formed by mixing together the first, second and third starch-containing components to form a dry mix, and then mixing the dry mix with water and a monoglyceride-diglyceride emulsifier to form the dough wherein the emulsifier is a monoglyceride-diglyceride emulsifier comprising a mixture of at least one monoglyceride and at least one diglyceride, optionally the monoglyceride-diglyceride emulsifier comprising or consisting of a food additive having E-number E471, optionally wherein:
i) the dry mix has a water content of from 5 to 20 wt% water, optionally from 10 to 12 wt% water, based on the weight of the dry mix; and/or
ii) when the dry mix is mixed with the water and monoglyceride-diglyceride emulsifier to form the dough the dry mix has a temperature of from 5 to 30 °C, optionally from 5 to 25 °C, and the water has a temperature of from 5 to 15 °C, optionally from 7 to 12 °C, further optionally from 8 to 11 °C; and/or
iii) the dry mix is mixed with the water and monoglyceride-diglyceride emulsifier to form the dough for a period of from 3 to 30 seconds, optionally from 5 to 30 seconds.

14. A method according to any foregoing claim wherein the snack food chip comprises a tortilla chip, optionally wherein in a random population of 100 of the tortilla chips, more than 90% by number have a continuous wall without through-holes or cracks extending therethrough.

15. A method according to any foregoing claim wherein the cooking step is carried out to cause the snack food chip to have a plurality of blisters on opposite major surfaces, each blister extending outwardly on both opposite major surfaces, optionally wherein for a sample of 6 randomly selected chips, the blisters have a mean total number of blisters per cm² of the opposite major surfaces of from 0.92 to 1.20, preferably from 1.00 to 1.20, with the blisters having a maximum width of 1.2 mm, optionally wherein for the sample of 6 randomly selected chips, the blisters include a mean total number of blisters having a maximum width of less than 0.5 mm of from 0.63 to 0.83, preferably from 0.68 to 0.78, blisters per cm², and a mean total number of blisters having a maximum width of from 0.5 to 1.2 mm of from 0.25 to 0.43, preferably from 0.30 to 0.38, blisters per cm².

## Patentansprüche

1. Verfahren zur Herstellung von Snack-Food-Chips, wobei das Verfahren die folgenden Schritte umfasst:
i. Bereitstellen einer ersten stärkehaltigen Komponente, die eine kaltwasserquellende Stärke umfasst, einer zweiten stärkehaltigen Komponente, die eine im Wesentlichen nicht gelatinisierte Stärke umfasst, und einer dritten stärkehaltigen Komponente, die Maismehl-Masa umfasst;
ii. Formen eines Teigs aus einem Gemisch der ersten, zweiten und dritten stärkehaltigen Komponenten und Wasser, wobei der Teig 20 bis 30 % der zweiten stärkehaltigen Komponente bezogen auf das Gewicht der Trockenzutaten im Teig umfasst, wobei die kaltwasserquellende Stärke eine Gelmatrix im Teig bildet;
iii. Formen einer Teigplatte aus dem Teig;
iv. Schneiden einer Vielzahl von Teigstücken aus der Teigplatte; und
v. Garen der Teigstücke, um eine Vielzahl von Snack-Food-Chips zu bilden, wobei der Garschritt so durchgeführt wird, dass die im Wesentlichen nicht gelatinisierte Stärke der zweiten stärkehaltigen Komponente gelatinisiert, wobei die Snack-Food-Chips eine Stärkematrix umfassen, die aus der ersten und der zweiten stärkehaltigen Komponente gebildet wird, sowie Maismehl-Masa-Partikel, die in der Stärkematrix dispergiert sind;
wobei die zweite stärkehaltige Komponente aus Tapioka-Koch-Stärke und/oder Wachsmais-Koch-Stärke ausgewählt ist;
wobei der Teig ferner 0,2 bis 1,5 Gew.-% eines Emulgators, der an freie Stärke bindet, bezogen auf das Gewicht des Teigs, umfasst, wobei der Emulgator ein Monoglycerid-Diglycerid-Emulgator ist, der ein Gemisch aus mindestens einem Monoglycerid und mindestens einem Diglycerid umfasst.

2. Verfahren nach Anspruch 1, wobei:
i) die kaltwasserquellende Stärke eine Spitzenviskosität bei einer Temperatur von weniger als 50 °C aufweist, gemessen mit einem Rapid-Viskosity-Analyser (RVA) in Überschusswasser mit einem Wassergewicht, das dem 3-Fachen des Gewichts der kaltwasserquellenden Stärke entspricht; und/oder
(ii) die zweite stärkehaltige Komponente eine Spitzenviskosität bei einer Temperatur von 50 bis 80 °C aufweist, gemessen mit einem Rapid-Viskosity-Analyser (RVA) in Überschusswasser mit einem Wassergewicht, das dem 3-Fachen des Gewichts der zweiten stärkehaltigen Komponente entspricht; und/oder
(iii) die dritte stärkehaltige Komponente eine Spitzenviskosität bei einer Temperatur von mehr als 80 °C aufweist, gemessen mit einem Rapid-Viskosity-Analyser (RVA) in Überschusswasser mit einem Wassergewicht, das dem 3-Fachen des Gewichts der dritten stärkehaltigen Komponente entspricht.

3. Verfahren nach Anspruch 2, wobei die zweite stärkehaltige Komponente eine Spitzenviskosität bei einer Temperatur von 60 bis 70 °C aufweist, gemessen mit einem Rapid-Viskosity-Analyser (RVA) in Überschusswasser mit einem Wassergewicht, das dem 3-Fachen des Gewichts der zweiten stärkehaltigen Komponente entspricht.

4. Verfahren nach einem der Ansprüche 1 bis 3, wobei der Monoglycerid-Diglycerid-Emulgator einen Lebensmittelzusatzstoff mit der E-Nummer E471 umfasst oder daraus besteht, gegebenenfalls wobei:
i) der Teig 0,2 bis 0,5 Gew.-% des Emulgators bezogen auf das Gewicht des Teigs umfasst; und/oder
ii) das Gewichtsverhältnis von zugesetztem Wasser : Emulgator im Teig 25 : 1 bis 200 : 1 beträgt, gegebenenfalls wobei das Gewichtsverhältnis von zugesetztem Wasser : Emulgator im Teig 50 : 1 bis 150 : 1 beträgt, noch gegebenenfalls 75 : 1 bis 125 : 1.

5. Verfahren nach einem der Ansprüche 1 bis 4, wobei:
i) im Garschritt v die zweite stärkehaltige Komponente gelatinisiert, um eine kontinuierliche flexible Stärkematrix zu bilden, in der eingeschlossener Dampf Blasen bildet, die eine Expansion der kontinuierlichen flexiblen Stärkematrix bewirken; und das Maismehl-Masa als Partikel verbleibt, die im Wesentlichen frei von absorbiertem Wasser sind und daher keinen Teil der Stärkematrix bilden; und/oder
ii) in Schritt ii der Teig bei einer Temperatur von bis zu 30 °C, gegebenenfalls von 5 bis 20 °C, noch gegebenenfalls von 10 bis 15 °C geformt wird; und/oder
iii) das Garen aus Frittieren besteht und vor dem Frittiervorgang kein Ofen- oder Röstvorgang stattfindet; und/oder
iv) der Teig 25 bis 35 Gew.-% zugesetztes Wasser, gegebenenfalls 25 bis 30 Gew.-% zugesetztes Wasser, bezogen auf das Gewicht des Teigs, umfasst.

6. Verfahren nach einem der Ansprüche 1 bis 5, wobei:
i) die dritte stärkehaltige Komponente ferner mindestens eine weitere Maiszutat umfasst, wobei die weitere Maiszutat aus frischer Mais-Masa, rohem Maismehl und gekochtem Maismehl oder einem beliebigen Gemisch aus zwei oder mehr davon ausgewählt ist; und/oder
ii) der Teig keine frische Mais-Masa-Zutat umfasst; und/oder
iii) die erste stärkehaltige Komponente aus einem vorgelatinisierten Getreidemehl, einem vorgelatinisierten Stärkederivat oder einem beliebigen Gemisch davon ausgewählt ist, gegebenenfalls wobei die erste stärkehaltige Komponente mindestens ein vorgelatinisiertes Getreidemehl ist, das aus Mais, Weizen, Gerste, Reis, Dinkel oder einem anderen aus Getreide gewonnenen Produkt oder einem beliebigen Gemisch davon ausgewählt ist, noch gegebenenfalls wobei die erste stärkehaltige Komponente ein vorgelatinisiertes Maismehl ist; und/oder
iv) der Teig ferner 5 bis 20 Gew.-%, gegebenenfalls 10 bis 15 Gew.-%, bezogen auf das Gewicht der Trockenzutaten des Teigs, von mindestens einem Getreidemehl umfasst, das aus Weizen, Gerste, Reis, Dinkel oder einem anderen aus Getreide gewonnenen Produkt oder einem beliebigen Gemisch davon ausgewählt ist.

7. Verfahren nach einem der Ansprüche 1 bis 6, wobei:
i) der Teig 35 bis 75 Gew.-% Maismehl-Masa und 5 bis 30 Gew.-% der ersten stärkehaltigen Komponente umfasst, jeweils bezogen auf das Gewicht der Trockenzutaten des Teigs, gegebenenfalls wobei der Teig 45 bis 70, noch gegebenenfalls 50 bis 65 Gew.-% Maismehl-Masa bezogen auf das Gewicht der Trockenzutaten des Teigs umfasst; und/oder
ii) der Teig 25 Gew.-% der zweiten stärkehaltigen Komponente bezogen auf das Gewicht der Trockenzutaten des Teigs umfasst; und/oder
iii) der Teig 5 bis 20 Gew.-% kaltwasserquellende Stärke in der ersten stärkehaltigen Komponente bezogen auf das Gewicht der Trockenzutaten des Teigs umfasst, gegebenenfalls wobei der Teig 10 bis 15 Gew.-%, noch gegebenenfalls etwa 12 Gew.-%, kaltwasserquellende Stärke in der ersten stärkehaltigen Komponente bezogen auf das Gewicht der Trockenzutaten im Teig umfasst.

8. Verfahren nach einem der Ansprüche 1 bis 7, wobei das Maismehl-Masa eine Partikelgröße aufweist, die zumindest teilweise in dem Bereich liegt, der sich von einem feinkörnigen Mais-Masa, bei dem höchstens 30 Gew.-% des feinkörnigen Mais-Masa auf einem 500-µm-Sieb zurückgehalten werden und mindestens 25 Gew.-% des feinkörnigen Mais-Masa durch ein 250-µm-Sieb hindurchgehen, bis zu einem grobkörnigen Mais-Masa erstreckt, bei dem mindestens 6 Gew.-% des grobkörnigen Mais-Masa auf einem 850-µm-Sieb zurückgehalten werden und höchstens 35 Gew.-% des grobkörnigen Mais-Masa durch ein 250-µm-Sieb hindurchgehen.

9. Verfahren nach einem der Ansprüche 1 bis 8, wobei das Maismehl-Masa ein Gemisch aus zwei Mehlen mit entsprechenden Partikelgrößen ist, gegebenenfalls wobei das Gemisch 20 bis 45 Gew.-%, typischerweise 30 bis 40 Gew.-%, einer ersten Mais-Masa und 55 bis 80 Gew.-%, typischerweise 60 bis 70 Gew.-%, einer zweiten Mais-Masa umfasst, wobei jeder Gew.-%-Anteil bezogen auf das Gewicht des Maismehl-Masa ist, wobei die erste Mais-Masa einen Partikelgrößenbereich aufweist, in dem 0 Gew.-% der ersten Mais-Masa auf einem 2000-µm-Sieb zurückgehalten werden, höchstens 11 Gew.-% der ersten Mais-Masa auf einem 841-µm-Sieb zurückgehalten werden und höchstens 32 Gew.-% der ersten Mais-Masa durch ein 149-µm-Sieb hindurchgehen, und die zweite Mais-Masa einen Partikelgrößenbereich aufweist, in dem 0 Gew.-% der zweiten Mais-Masa auf einem 2000-µm-Sieb zurückgehalten werden, höchstens 22 Gew.-% der zweiten Mais-Masa auf einem 841-µm-Sieb zurückgehalten werden und höchstens 26 Gew.-% der zweiten Mais-Masa durch ein 149-µm-Sieb hindurchgehen.

10. Verfahren nach einem der Ansprüche 1 bis 9, wobei die Teigplatte eine Dicke von 0,5 bis 1,5 mm, gegebenenfalls von 0,6 bis 1 mm aufweist.

11. Verfahren nach einem der Ansprüche 1 bis 10, wobei:
i) in Schritt iii die Teigplatte in einer Walzvorrichtung mit einer Lineargeschwindigkeit für die Platte von 20 bis 60 linearen Metern/Minute, gegebenenfalls von 30 bis 50 linearen Metern/Minute geformt wird; und/oder
ii) die Teigstücke während des Frittierens gegen eine Form gepresst werden, so dass die Snack-Food-Chips dreidimensional in einer vorgegebenen Form geformt werden.

12. Verfahren nach einem der Ansprüche 1 bis 11, wobei das Garen Frittieren umfasst oder daraus besteht und die Frittiertemperatur 160 bis 200 °C, gegebenenfalls 170 bis 190 °C, noch gegebenenfalls etwa 180 °C beträgt, gegebenenfalls wobei die Frittierzeit 15 bis 30 Sekunden, gegebenenfalls 16 bis 25 Sekunden, noch gegebenenfalls 18 bis 23 Sekunden beträgt.

13. Verfahren nach einem der vorstehenden Ansprüche, wobei der Teig geformt wird, indem die erste, zweite und dritte stärkehaltige Komponente zusammengemischt werden, um eine Trockenmischung zu bilden, und dann die Trockenmischung mit Wasser und einem Monoglycerid-Diglycerid-Emulgator gemischt wird, um den Teig zu bilden, wobei der Emulgator ein Monoglycerid-Diglycerid-Emulgator ist, der ein Gemisch aus mindestens einem Monoglycerid und mindestens einem Diglycerid umfasst, gegebenenfalls wobei der Monoglycerid-Diglycerid-Emulgator einen Lebensmittelzusatzstoff mit der E-Nummer E471 umfasst oder daraus besteht, gegebenenfalls wobei:
i) die Trockenmischung einen Wassergehalt von 5 bis 20 Gew.-% Wasser, gegebenenfalls 10 bis 12 Gew.-% Wasser, bezogen auf das Gewicht der Trockenmischung, aufweist; und/oder
ii) wenn die Trockenmischung mit dem Wasser und dem Monoglycerid-Diglycerid-Emulgator gemischt wird, um den Teig zu bilden, die Trockenmischung eine Temperatur von 5 bis 30 °C, gegebenenfalls 5 bis 25 °C, aufweist und das Wasser eine Temperatur von 5 bis 15 °C, gegebenenfalls 7 bis 12 °C, noch gegebenenfalls 8 bis 11 °C aufweist; und/oder
iii) die Trockenmischung mit dem Wasser und dem Monoglycerid-Diglycerid-Emulgator über einen Zeitraum von 3 bis 30 Sekunden, gegebenenfalls 5 bis 30 Sekunden, gemischt wird, um den Teig zu bilden.

14. Verfahren nach einem der vorstehenden Ansprüche, wobei der Snack-Food-Chips einen Tortilla-Chips umfasst, gegebenenfalls wobei in einer zufälligen Population von 100 der Tortilla-Chips mehr als 90 % nach Anzahl eine kontinuierliche Wandung ohne Durchgangslöcher oder Risse aufweisen, die sich durch diese erstrecken.

15. Verfahren nach einem der vorstehenden Ansprüche, wobei der Garschritt so durchgeführt wird, dass der Snack-Food-Chips auf den gegenüberliegenden Hauptoberflächen eine Vielzahl von Blasen aufweist, wobei sich jede Blase auf beiden gegenüberliegenden Hauptoberflächen nach außen erstreckt, gegebenenfalls wobei für eine Probe von 6 zufällig ausgewählten Chips die Blasen eine mittlere Gesamtanzahl von Blasen pro cm² der gegenüberliegenden Hauptoberflächen von 0,92 bis 1,20, vorzugsweise von 1,00 bis 1,20 aufweisen, wobei die Blasen eine maximale Breite von 1,2 mm haben, gegebenenfalls wobei für die Probe von 6 zufällig ausgewählten Chips die Blasen eine mittlere Gesamtanzahl von Blasen mit einer maximalen Breite von weniger als 0,5 mm von 0,63 bis 0,83, vorzugsweise von 0,68 bis 0,78, Blasen pro cm², und eine mittlere Gesamtanzahl von Blasen mit einer maximalen Breite von 0,5 bis 1,2 mm von 0,25 bis 0,43, vorzugsweise von 0,30 bis 0,38, Blasen pro cm² umfassen.

## Revendications

1. Un procédé de fabrication de chips alimentaires apéritives, le procédé comprenant les étapes consistant à :
i. fournir un premier composant contenant de l'amidon qui comprend un amidon gonflant à froid, un deuxième composant contenant de l'amidon qui comprend un amidon substantiellement non gélatinisé, et un troisième composant contenant de l'amidon qui comprend de la farine de masa de maïs ;
ii. former une pâte à partir d'un mélange des premier, deuxième et troisième composants contenant de l'amidon et d'eau, la pâte comprenant de 20 à 30 % du deuxième composant contenant de l'amidon sur la base du poids des ingrédients secs dans la pâte, l'amidon gonflant à froid formant une matrice gel dans la pâte ;
iii. former une feuille de pâte à partir de la pâte ;
iv. découper une pluralité de morceaux de pâte dans la feuille de pâte ; et
v. cuire les morceaux de pâte pour former une pluralité de chips alimentaires apéritives, l'étape de cuisson étant réalisée pour amener l'amidon substantiellement non gélatinisé du deuxième composant contenant de l'amidon à se gélatiniser, les chips alimentaires apéritives comprenant une matrice d'amidon formée à partir des premier et deuxième composants contenant de l'amidon, et des particules de masa de maïs dispersées dans la matrice d'amidon ;
dans lequel le deuxième composant contenant de l'amidon étant sélectionné parmi l'amidon de tapioca de type « cook-up » et/ou l'amidon de maïs cireux de type « cook-up » ;
dans lequel la pâte comprenant en outre de 0,2 à 1,5 % en poids d'un émulsifiant qui se lie à l'amidon libre, sur la base du poids de la pâte, l'émulsifiant étant un émulsifiant monoglycéride-diglycéride comprenant un mélange d'au moins un monoglycéride et d'au moins un diglycéride.

2. Un procédé selon la revendication 1, dans lequel :
i) l'amidon gonflant à froid a une viscosité de pointe à une température inférieure à 50 °C, mesurée par un analyseur de viscosité rapide (RVA) dans de l'eau en excès ayant un poids d'eau qui est 3 fois le poids de l'amidon gonflant à froid ; et/ou
(ii) le deuxième composant contenant de l'amidon a une viscosité de pointe à une température de 50 à 80 °C, mesurée par un analyseur de viscosité rapide (RVA) dans de l'eau en excès ayant un poids d'eau qui est 3 fois le poids du deuxième composant contenant de l'amidon ; et/ou
(iii) le troisième composant contenant de l'amidon a une viscosité de pointe à une température supérieure à 80 °C, mesurée par un analyseur de viscosité rapide (RVA) dans de l'eau en excès ayant un poids d'eau qui est 3 fois le poids du troisième composant contenant de l'amidon.

3. Un procédé selon la revendication 2, dans lequel le deuxième composant contenant de l'amidon a une viscosité de pointe à une température de 60 à 70 °C, mesurée par un analyseur de viscosité rapide (RVA) dans de l'eau en excès ayant un poids d'eau qui est 3 fois le poids du deuxième composant contenant de l'amidon.

4. Un procédé selon l'une quelconque des revendications 1 à 3, dans lequel l'émulsifiant monoglycéride-diglycéride comprend ou est constitué d'un additif alimentaire ayant le numéro E E471, optionnellement dans lequel :
i) la pâte comprend de 0,2 à 0,5 % en poids de l'émulsifiant, sur la base du poids de la pâte ; et/ou
ii) le rapport pondéral de l'eau ajoutée : émulsifiant dans la pâte est de 25 : 1 à 200 : 1, optionnellement dans lequel le rapport pondéral de l'eau ajoutée : émulsifiant dans la pâte est de 50 : 1 à 150 : 1, encore optionnellement de 75 : 1 à 125 : 1.

5. Un procédé selon l'une quelconque des revendications 1 à 4, dans lequel :
i) dans l'étape de cuisson v, le deuxième composant contenant de l'amidon se gélatinise pour former une matrice d'amidon flexible continue dans laquelle la vapeur piégée forme des bulles qui provoquent l'expansion de la matrice d'amidon flexible continue ; et le masa de maïs demeure sous forme de particules qui sont substantiellement exemptes d'eau absorbée et ne fait donc pas partie de la matrice d'amidon ; et/ou
ii) dans l'étape ii, la pâte est formée à une température allant jusqu'à 30 °C, optionnellement de 5 à 20 °C, encore optionnellement de 10 à 15 °C ; et/ou
iii) la cuisson consiste en une friture et il n'y a pas d'étape de cuisson au four ou de grillage avant l'étape de friture ; et/ou
iv) la pâte comprend de 25 à 35 % en poids d'eau ajoutée, optionnellement de 25 à 30 % en poids d'eau ajoutée, sur la base du poids de la pâte.

6. Un procédé selon l'une quelconque des revendications 1 à 5, dans lequel :
i) le troisième composant contenant de l'amidon comprend en outre au moins un autre ingrédient à base de maïs, l'autre ingrédient à base de maïs étant sélectionné parmi la masa de maïs fraîche, la farine de maïs crue et la farine de maïs cuite, ou tout mélange de deux ou plusieurs de ces ingrédients ; et/ou
ii) la pâte ne comprend pas d'ingrédient à base de masa de maïs fraîche ; et/ou
iii) le premier composant contenant de l'amidon est sélectionné parmi une farine de céréales prégélatinisée, un dérivé d'amidon prégélatinisé, ou tout mélange de ceux-ci, optionnellement dans lequel le premier composant contenant de l'amidon est au moins une farine de céréales prégélatinisée sélectionnée parmi le maïs, le blé, l'orge, le riz, l'épeautre, ou tout autre produit dérivé d'une céréale, ou tout mélange de ceux-ci, encore optionnellement dans lequel le premier composant contenant de l'amidon est une farine de maïs prégélatinisée ; et/ou
iv) la pâte comprend en outre de 5 à 20 % en poids, optionnellement de 10 à 15 % en poids, sur la base du poids des ingrédients secs de la pâte, d'au moins une farine de céréales sélectionnée parmi le blé, l'orge, le riz, l'épeautre, ou tout autre produit dérivé d'une céréale, ou tout mélange de ceux-ci.

7. Un procédé selon l'une quelconque des revendications 1 à 6, dans lequel :
i) la pâte comprend de 35 à 75 % en poids de farine de masa de maïs et de 5 à 30 % en poids du premier composant contenant de l'amidon, chacun sur la base du poids des ingrédients secs de la pâte, optionnellement dans lequel la pâte comprend de 45 à 70, encore optionnellement de 50 à 65 % en poids de farine de masa de maïs, sur la base du poids des ingrédients secs de la pâte ; et/ou
ii) la pâte comprend 25 % en poids du deuxième composant contenant de l'amidon, sur la base du poids des ingrédients secs de la pâte ; et/ou
iii) la pâte comprend de 5 à 20 % en poids d'amidon gonflant à froid dans le premier composant contenant de l'amidon, sur la base du poids des ingrédients secs de la pâte, optionnellement dans lequel la pâte comprend de 10 à 15 % en poids, encore optionnellement environ 12 % en poids, d'amidon gonflant à froid dans le premier composant contenant de l'amidon, sur la base du poids des ingrédients secs dans la pâte.

8. Un procédé selon l'une quelconque des revendications 1 à 7, dans lequel la farine de masa de maïs a une taille de particule comprise au moins partiellement dans la plage s'étendant d'une masa de maïs à particules fines, dans laquelle au maximum 30 % en poids de la masa de maïs à particules fines est retenue sur un tamis de 500 µm et au moins 25 % en poids de la masa de maïs à particules fines passe à travers un tamis de 250 µm, à une masa de maïs à particules grossières, dans laquelle au moins 6 % en poids de la masa de maïs à particules grossières est retenue sur un tamis de 850 µm et au maximum 35 % en poids de la masa de maïs à particules grossières passe à travers un tamis de 250 µm.

9. Un procédé selon l'une quelconque des revendications 1 à 8, dans lequel la farine de masa de maïs est un mélange de deux farines ayant des tailles de particules respectives, optionnellement le mélange comprenant de 20 à 45 % en poids, typiquement de 30 à 40 % en poids, d'une première masa de maïs et de 55 à 80 % en poids, typiquement de 60 à 70 % en poids, d'une deuxième masa de maïs, chaque % en poids étant basé sur le poids de la farine de masa de maïs, la première masa de maïs ayant une plage de taille de particule dans laquelle 0 % en poids de la première masa de maïs est retenu sur un tamis de 2000 µm, au maximum 11 % en poids de la première masa de maïs est retenu sur un tamis de 841 µm et au maximum 32 % en poids de la première masa de maïs passe à travers un tamis de 149 µm, et la deuxième masa de maïs ayant une plage de taille de particule dans laquelle 0 % en poids de la deuxième masa de maïs est retenu sur un tamis de 2000 µm, au maximum 22 % en poids de la deuxième masa de maïs est retenu sur un tamis de 841 µm et au maximum 26 % en poids de la deuxième masa de maïs passe à travers un tamis de 149 µm.

10. Un procédé selon l'une quelconque des revendications 1 à 9, dans lequel la feuille de pâte a une épaisseur de 0,5 à 1,5 mm, optionnellement de 0,6 à 1 mm.

11. Un procédé selon l'une quelconque des revendications 1 à 10, dans lequel :
i) dans l'étape iii, la feuille de pâte est formée dans un appareil de laminage à une vitesse linéaire pour la feuille de 20 à 60 mètres linéaires/minute, optionnellement de 30 à 50 mètres linéaires/minute ; et/ou
ii) les morceaux de pâte sont mis en forme contre un moule pendant la friture de sorte que les chips alimentaires apéritives sont mis en forme en trois dimensions selon une forme prédéfinie.

12. Un procédé selon l'une quelconque des revendications 1 à 11, dans lequel la cuisson comprend ou est constituée d'une friture et la température de friture est de 160 à 200 °C, optionnellement de 170 à 190 °C, encore optionnellement environ 180 °C, optionnellement dans lequel le temps de friture est de 15 à 30 secondes, optionnellement de 16 à 25 secondes, encore optionnellement de 18 à 23 secondes.

13. Un procédé selon l'une quelconque des revendications précédentes, dans lequel la pâte est formée en mélangeant ensemble les premier, deuxième et troisième composants contenant de l'amidon pour former un mélange sec, puis en mélangeant le mélange sec avec de l'eau et un émulsifiant monoglycéride-diglycéride pour former la pâte, l'émulsifiant étant un émulsifiant monoglycéride-diglycéride comprenant un mélange d'au moins un monoglycéride et d'au moins un diglycéride, optionnellement l'émulsifiant monoglycéride-diglycéride comprenant ou étant constitué d'un additif alimentaire ayant le numéro E E471, optionnellement dans lequel :
i) le mélange sec a une teneur en eau de 5 à 20 % en poids d'eau, optionnellement de 10 à 12 % en poids d'eau, sur la base du poids du mélange sec ; et/ou
ii) lorsque le mélange sec est mélangé avec l'eau et l'émulsifiant monoglycéride-diglycéride pour former la pâte, le mélange sec a une température de 5 à 30 °C, optionnellement de 5 à 25 °C, et l'eau a une température de 5 à 15 °C, optionnellement de 7 à 12 °C, encore optionnellement de 8 à 11 °C ; et/ou
iii) le mélange sec est mélangé avec l'eau et l'émulsifiant monoglycéride-diglycéride pour former la pâte pendant une durée de 3 à 30 secondes, optionnellement de 5 à 30 secondes.

14. Un procédé selon l'une quelconque des revendications précédentes, dans lequel la chips alimentaire apéritive comprend une chips tortilla, optionnellement dans lequel, dans une population aléatoire de 100 chips tortilla, plus de 90 % en nombre ont une paroi continue sans trous traversants ni fissures s'étendant à travers celle-ci.

15. Un procédé selon l'une quelconque des revendications précédentes, dans lequel l'étape de cuisson est réalisée pour amener la chips alimentaire apéritive à avoir une pluralité de cloques sur les surfaces majeures opposées, chaque cloque s'étendant vers l'extérieur sur les deux surfaces majeures opposées, optionnellement dans lequel, pour un échantillon de 6 chips sélectionnées aléatoirement, les cloques ont un nombre total moyen de cloques par cm² des surfaces majeures opposées de 0,92 à 1,20, de préférence de 1,00 à 1,20, les cloques ayant une largeur maximale de 1,2 mm, optionnellement dans lequel, pour l'échantillon de 6 chips sélectionnées aléatoirement, les cloques comprennent un nombre total moyen de cloques ayant une largeur maximale inférieure à 0,5 mm de 0,63 à 0,83, de préférence de 0,68 à 0,78, cloques par cm², et un nombre total moyen de cloques ayant une largeur maximale de 0,5 à 1,2 mm de 0,25 à 0,43, de préférence de 0,30 à 0,38, cloques par cm².
